Europäisches Patentamt

European Patent Office  (11) Numéro de publication: **0 153 206**
**B1**

Office européen des brevets

(12) **FASCICULE DE BREVET EUROPEEN**

(45) Date de publication du fascicule du brevet:
14.09.88

(51) Int. Cl.⁴: **C 08 L 5/00** // C09D17/00,
C10L1/32 ,(C08L5/00, 5:14)

(21) Numéro de dépôt: **85400069.2**

(22) Date de dépôt: **16.01.85**

(54) Suspensions aqueuses de particules solides.

(30) Priorité: **31.01.84 FR 8401443**

(43) Date de publication de la demande:
**28.08.85 Bulletin 85/35**

(45) Mention de la délivrance du brevet:
**14.09.88 Bulletin 88/37**

(84) Etats contractants désignés:
**BE CH DE FR GB LI SE**

(56) Documents cités:
**DE - A - 2 738 355**
**FR - A - 1 502 883**
**GB - A - 1 604 216**

**CHEMICAL ABSTRACTS, vol. 89, no. 16, octobre 1978,**
**page 170, no. 132311z, Columbus, Ohio, US; & JP - A - 78**
**50203 (DAIICHI SEIYAKU CO., LTD.) 08-05-1978**

(73) Titulaire: **RHONE-POULENC CHIMIE, 25, quai Paul**
**Doumer, F-92408 Courbevoie Cédex (FR)**

(72) Inventeur: **Peignier, Michel, 88, rue Yves Le Coz,**
**F-78000 - Versailles (FR)**
Inventeur: **Besnard, Marie-Madeleine, 26, rue Roger**
**Salengro, F-92160 - Antony (FR)**

(74) Mandataire: **Tavernier, Colette et al, RHONE-POULENC**
**INTERSERVICES Service Brevets Chimie 25, Quai Paul**
**Doumer, F-92408 Courbevoie Cédex (FR)**

ACTORUM AG

## Description

La présente invention a pour objet des suspensions aqueuses fluides de particules solides stabilisées par un mélange de gomme xanthane et de gomme de caroube.

Le maintien en suspension de matières solides insolubles dans un système aqueux intéresse des domaines d'application très variés comme l'agriculture, l'alimentation humaine et animale, l'industrie pétrolière, les industries du charbon, du verre, du papier et de la peinture. Dans ces applications, la sédimentation des matières solides durant le stockage et le transport, de même que la réhomogénéisation au moment de l'emploi des particules sédimentées posent encore des problèmes.

Le pouvoir stabilisant de la gomme xanthane agissant sur la viscosité de la solution est connu. Pour un matériau donné, la concentration en gomme requise pour obtenir le pouvoir suspensif est fonction de la densité et de la taille des particules de celui-ci. Dans certains cas, la concentration requise peut apporter un accroissement de viscosité trop élevé défavorable. Même avec un agent épaississant comme la gomme xanthane, les particules tendent à sédimenter en particulier les plus grosses en dépit du fait que le milieu permet de supporter la majorité des particules. Il devient alors souvent extrêmement difficile après une durée de stockage prolongée de remettre en suspension les particules sédimentées par suite d'un compactage au fond du récipient.

Des mélanges de gomme xanthane et de gomme de caroube ont été décrits dans le brevet américain US-A-3557016. Ces mélanges produisent des gels reversibles stables par chauffage suivi d'un refroidissement ou par dissolution à froid sous agitation à vitesse de cisaillement élevée. Dans le procédé à chaud la concentration du mélange dans la phase aqueuse est comprise entre 0,02 et 4%, préférablement entre 0,1 et 1% alors que dans le procédé à froid elle se situe entre 0,1 et 2%. Dans les deux cas, on observe un accroissement synergétique élevé de la résistance du gel ou de la viscosité de la solution. Ce comportement est mis à profit pour la préparation de compositions épaississantes et gélifiantes.

Il a maintenant été trouvé que l'addition dans un milieu aqueux de très faibles quantités d'un mélange de gomme xanthane et de gomme de caroube, et facultativement d'amidon, permet d'obtenir un pouvoir suspensif élevé sans compactage des particules ayant éventuellement sédimenté par suite d'un stockage prolongé. On notera que l'association de xanthane et d'un autre galactomannane tel que la gomme guar ne permet pas d'obtenir ce résultat.

Les suspensions de particules solides selon l'invention contiennent en solution de 0,01 à 0,1% en poids d'un mélange de gomme xanthane et de gomme de caroube, le rapport pondéral gomme xanthane/gomme de caroube étant compris entre 30/70 et 70/30. La gomme xanthane est un hétéropolysaccharide d'une masse moléculaire de plusieurs millions produit par fermentation des hydrates de carbone sous l'action de bactéries du genre Xanthomonas et plus particulièrement de l'espèce Xanthomonas campestris. Les gommes xanthanes sont produites commercialement et sont facilement disponibles.

La densité et la granulométrie des particules solides peuvent varier dans un domaine très large. A titre indicatif, des particules de densité comprise entre 1,1 et 10 et de granulométrie allant jusqu'à 200 µm ont été mises en suspension dans le milieu selon l'invention. Comme exemples de particules solides, on peut citer, sans limitation, des pigments comme l'oxyde de titane, des particules abrasives comme l'oxyde de cérium, des charges minérales comme l'oxyde de magnésium, le carbonate de calcium, l'oxyde de fer, des semences, des pulpes de fruits, pesticides, insecticides et autres produits insolubles.

La concentration de la suspension en matières insolubles peut atteindre des valeurs élevées par exemple 80% du poids total de la suspension.

Dans une variante du procédé, intéressante notamment pour les particules de granulométrie supérieure à environ 100 µm, le milieu aqueux contient en plus de la gomme xanthane et de la gomme de caroube un amidon soluble dans l'eau. L'addition d'amidon ne modifie pas sensiblement la viscosité du milieu mais aide au maintien des particules en suspension. L'amidon utilisé peut être de tout type tel que les amidons de blé, de maïs, de riz, de pomme de terre, prétraités en vue de leur solubilisation dans l'eau froide. L'amidon est introduit dans la suspension à raison de 0,05 à 0,3% du poids total de la suspension.

En fonction des conditions d'emploi et de stockage spécifiques pour chaque cas particulier des agents despersants tels que les polyphosphates de métaux alcalins, par exemple le tripolyphosphate de sodium, sont avantageusement incorporés dans la composition ainsi que, le cas échéant, d'autres additifs par exemple des agents de conservation, bactéricides, colorants, antimousses, sels minéraux ou organiques ou tout autre composé soluble dans l'eau.

La préparation des suspension selon l'invention peut être réalisée par dissolution du mélange des gommes dans le milieu aqueux sous agitation et de préférence à froid puis dispersion du matériau insoluble. Alternativement, il est possible de disperser les particules solides dans l'eau puis d'ajouter et dissoudre le mélange des gommes sous agitation. Le mélange de gommes est généralement introduit sous forme d'une solution aqueuse concentrée à 2–4% en poids.

Le facteur déterminant pour le choix du mélange binaire ou ternaire, les proportions relatives de chacun des colloïdes et la température de préparation est la taille des particules du matériau à mettre en suspension.

· Dans le cas de particules denses et fines, on préfère le procédé à froid (température inférieure à 30°C) qui assure un bon maintien en suspension tout en conférant aux compositions une faible viscosité. Pour les plus grosses particules, supérieures à environ 100 µm, il est préférable d'utiliser un mélange ternaire avec amidon, la dissolution étant alors réalisé par chauffage à température supérieure à 30°C, par exemple à 30–80°C et de préférence 65–75°C.

La faible teneur en colloïdes des solutions confère aux suspensions selon l'invention des propriétés rhéologiques qui leur permettent d'être versées, pompées ou injectées sans difficulté. Les suspensions présentent des caractéristiques de stabilité et de dispersibilité améliorées par rapport à l'emploi de gomme xanthane seule utilisée dans les mêmes proportions. Ces propriétés permettent d'envisager leur emploi dans tous domaines industriels ou alimentaires.

L'invention est illustrée par les exemples ci-après:

Exemple 1: Suspension d'oxyde de cérium

On utilise une solution à 0,085% (poids/volume) d'un mélange de gomme xanthane (Rhodopol 23 – de la Société Rhône-Poulenc Spécialtés Chimiques) et de gomme de caroube de rapport pondéral 50/50. La solution est préparée par dissolution à 20°C dans l'eau de ville sous agitation maintenue 10 minutes à 800 tours/mn. Cette solution présente une viscosité de 100 mPa.s (Rheomat 30 – Système MSO au gradient de vitesse de 0,24 s$^{-1}$).

Dans une éprouvette de 1 litre, on introduit 937 ml de la solution précédente à laquelle on ajoute 3 g de tripolyphosphate de soude (TPP) comme agent dispersant, 10 g d'une solution aqueuse à 30% de formol puis 50 g d'oxyde de cérium (CEROX 1650 de la Société Rhône-Poulenc Spécialtés Chimiques) ayant une densité de 6,9 et une granulométrie inférieure à 10 μm.

Après homogénéisation du mélange, on laisse la suspension au repos. On évalue la sédimentation et le compactage au moyen des tests suivants:

Sédimentation: On mesure la densité en fonction du temps au 1/3 supérieur de l'éprouvette et on la compare à celle d'un témoin préparé de la même manière mais sans addition du mélange stabilisant de gommes.

Compactage: Un échantillon de 250 ml est stocké en flacon bouché de 250 ml pendant 3 jours. Le flacon est ensuite mis en rotation à 90° de son axe vertical à la vitesse de 1 tour/sec pendant 30 sec., ces conditions étant suffisantes pour remettre en suspension une dispersion de CEROX 1650 dans l'eau sans aucun additif (pas de compactage). La fraction de cerox ayant été redispersé est eliminée avec le liquide. On détermine l'extrait sec de la fraction compactée non dispersée. Les résultats sont les suivants:

– Sédimentation

| Temps (en minutes) | Densité Témoin | Ex. 1 |
|---|---|---|
| 0 | 1,043 | 1,043 |
| 10 | 1,039 | 1,043 |
| 20 | 1,037 | 1,042 |
| 40 | 1,032 | 1,040 |
| 60 | 1,026 | 1,034 |

– Cerox compacté en %: Témoin (sans stabilisant) 35, Ex. 1… <1.

Cette suspension est utilisable pour le polissage des verres minéraux nécessitant une stabilité à court terme sans compactage à long terme.

Exemple 2: Suspension de charbon

On utilise un fuel synthétique à 66% environ de charbon présentant au stockage une mauvaise stabilité avec très fort compactage.

Dans 100 g de fuel, on ajoute en agitant 1 g d'une solution à 30% de formol et 0,15 g de TPP, puis 1,2 g d'une solution aqueuse à 2,5% de gomme xanthane et gomme de caroube dans le rapport pondéral 40/60. On mesure la viscosité au temps 0 et après 10 jours de repos à 23°C et on observe la stabilité après 15 jours de stockage à 23°C.

| | | Viscosité (mPa.s)* 2 t/mn | 10 t/mn | Stabilité Remarques |
|---|---|---|---|---|
| Témoin | to | 12 000 | 4 600 | remontée d'eau de 2 cm/10 cm |
| | 10 j. | – | – | compactage total sous la couche d'eau |
| Ex. 2 | to | 12 000 | 4 600 | remontée d'eau de 0 mm/10 cm |
| | 10 j. | 8 000 | 3 000 | homogène – Pas de dépôt. Bonne coulabilité |

*BROOKFIELD RV – aiguille n° 5 – 23°C

Exemple 3: Suspension d'oxyde de fer

Dans une éprouvette de 100 ml, on disperse 10 g d'oxyde ferreux de densité voisine de 5,3 et granulométrie inférieure à 10 μm dans 90 ml de solution à 0,085% de gomme xanthane/gomme caroube 50/50 préparée à 20°C (selon exemple 1).

On mesure le % de volume en suspension en fonction du temps comparativement à une suspension préparée dans les mêmes conditions mais contenant 0,15% de gomme xanthane sans caroube. Cette solution a une viscosité de 400 mPa.s.

| Volume en suspension (%) | | | | | |
|---|---|---|---|---|---|
| Durée (jours) | 1 | 3 | 5 | 10 | 20 |
| Xanthane/caroube 0,085% | 100 | 98 | 95 | 90 | 76 |
| Xanthane seul 0,15% | 90 | 75 | 65 | 51 | 38 |

On constate que le pouvoir de suspension du milieu contenant le mélange des gommes est notablement amélioré, particulièrement à long terme, par rapport à la gomme xanthane seule utilisée à une concentration double procurant une viscosité 4 fois plus élevée.

Exemple 4:

Dans une éprouvette de 100 ml, on met à suspension 10 g de billes de verre de densité environ 2,5 et de granulométrie comprise entre 160 et 250 µm dans 90 ml d'une solution contenant en poids 0,0425% de xanthane, 0,0425 % de caroube et 0,085 % d'amidon de maïs précuit (Société des Produits du maïs). La dissolution du mélange à été réalisée à 70°C. Le % de volume en suspension en fonction du temps est le suivant:

    1 jour    98%
    5 jours   75%
   20 jours  50%
   30 jours  50%

Les mêmes billes de verre mises en suspension dans l'eau sédimentent très rapidement pour n'occuper qu'un volume de 7% en moins d'une minute.

**Revendications**

1. Suspensions aqueuses de particules solides caractérisées en ce qu'elles contiennent en solution 0,01 à 0,1% en poids d'un mélange de gomme xanthane et de gomme de caroube dans un rapport pondéral compris entre 30/70 et 70/30.

2. Suspensions aqueuses de particules selon la revendication 1 caractérisées en ce qu'elles comprennent additionnellement un amidon soluble dans l'eau.

3. Suspensions selon la revendication 2 caractérisées en ce que l'amidon est incorporé à raison de 0,05 à 0,3% en poids par rapport au poids total de la suspension.

4. Suspensions selon l'une des revendications 1 à 3 caractérisées en ce qu'elles comprennent additionellement un agent dispersant soluble dans l'eau.

5. Suspensions selon la revendication 4 caractérisées en ce que le dispersant est un polyphosphate de métal alcalin.

6. Procédé de préparation des suspensions selon l'une des revendications 1 à 5 caractérisé en ce que la dissolution du mélange des gommes est réalisée à température inférieure à 30°C, les particules solides étant dispersées dans le milieu aqueux avant ou après la dissolution.

7. Procédé de préparation des suspensions selon l'une des revendications 3 à 5 caractérisé en ce qu'il consiste à dissoudre la gomme xanthane, la gomme de caroube et l'amidon à une température égale ou supérieure à 30°C, les particules solides étant dispersées dans le milieu aqueux avant ou après la dissolution.

**Claims**

1. Aqueous suspensions of solid particles, characterized in that they contain in solution 0.01 to 0.1% by weight of a mixture of xanthan gum and of carob gum in a ratio of between 30/70 and 70/30 by weight.

2. Aqueous suspensions of particles according to Claim 1, characterized in that they additionally comprise a water-soluble starch.

3. Suspensions according to Claim 2, characterized in that the starch is incorporated in a proportion of 0.05 to 0.3% by weight relative to the total weight of the suspension.

4. Suspensions according to one of Claims 1 to 3, characterized in that they additionnally comprise a water-soluble dispersing agent.

5. Suspensions according to Claim 4, characterized in that the dispersant is an alkali metal polyphosphate.

6. Process for preparing the suspensions according to one of Claims 1 to 5, characterized in that the dissolving of the mixture of the gums is carried out at a temperature of below 30°C, the solid particles being dispersed in the aqueous medium before or after dissolution.

7. Process for preparing the suspensions according to one of Claims 3 to 5, characterized in that it consists in dissolving the xanthan gum, the carob gum and the starch at a temperature equal to or higher than 30°C, the solid particles being dispersed in the aqueous medium before or after dissolution.

**Patentansprüche**

1. Wäßrige Suspensionen von festen Teilchen, dadurch gekennzeichnet, daß sie in Lösung 0,01 bis 0,1 Gew.-% eines Gemisches aus Xanthangummi und Johannisbrotbohnengummi in einem Gewichtsverhältnis von 30/70 bis 70/30 enthalten.

2. Wäßrige Suspensionen von Teilchen nach Anspruch 1, dadurch gekennzeichnet, daß sie zusätzlich eine in Wasser lösliche Stärke enthalten.

3. Suspensionen nach Anspruch 2, dadurch gekennzeichnet, daß die Stärke in einer Menge von 0,05 bis 0,3 Gew.-%, bezogen auf das Gesamtgewicht der Suspension, vorhanden ist.

4. Suspensionen nach einem der Ansprüche 1 bis 3, dadurch gekennzeichnet, daß sie zusätzlich ein wasserlösliches Dispergiermittel enthalten.

5. Suspensionen nach Anspruch 4, dadurch gekennzeichnet, daß das Dispergiermittel ein Alkalipolyphosphat ist.

6. Verfahren zur Herstellung der Suspensionen nach einem der Ansprüche 1 bis 5, dadurch gekennzeichnet, daß das Lösen des Gemisches der Gummen bei einer Temperatur unterhalb 30°C durchgeführt wird, wobei die festen Teilchen in dem wäßrigen Medium vor oder nach dem Lösen dispergiert werden.

7. Verfahren zur Herstellung der Suspensionen nach einem der Ansprüche 3 bis 5, dadurch gekennzeichnet, daß der Xanthangummi, der Johannisbrotbohnengummi und die Stärke bei einer Temperatur gleich oder größer 30°C aufgelöst werden, wobei die festen Teilchen in dem wäßrigen Medium vor oder nach dem Auflösen dispergiert werden.